# EUROPEAN PATENT APPLICATION

(11) **EP 1 128 297 A1**
(43) Date of publication of application: **29.08.2001**
(21) Application number: 00301355.4
(22) Date of filing: 21.02.2000
(51) Int. Cl.: G06F 17/60

(54) **Searching for carriage information**

(71) Applicant: CMC Magnetics Corporation, Taipei (TW)
(72) Inventor: Lin, Danny, Taipei (TW); Chen, Kevin, Dhijr City, 221, Taipei (TW)
(74) Representative: Abrams, Michael John

(57) **Abstract**

In a method of providing a searching service for carriage information in a server, the server provides a port database that contains many port records each corresponding to a port. Each port record includes a carrier trip item having a stop in the corresponding port. When receiving a port name, the server can quickly search the port database and acquire the result. In addition, the carrier trip item may further include a link directed to a web page containing business data pertaining to the corresponding carrier agent. The web page also can contain a link to access the information of carrier lines provided by the corresponding carrier agent.

## Description

### Field of the Invention:

The present invention is related to an information processing system and method, more specifically, to a method for processing a searching service for carriage information, such as the carrier lines provided by various transportation companies and the carrier trips provided by various forwarders. This invention can improve the efficiency of searching for a suitable carrier trip meeting the carriage requirements. In addition, it also provides an interactive interface for the customers to easily access the detailed data of the carrier agents or forwarders, thereby establishing an interactive and real-time transaction environment.

### Description of the Prior Art:

In the following description, these terms "carrier agents, shipping agents or forwarders" refer to the carrier or ship owners who owns carriers or ships to convey goods, or the carrier or ship agency companies which can provide transportation to convey goods. In addition, the term "customers" refers to the persons or firms who have a carriage requirement from a departure location to a destination location at a specified time period. In addition, the term "carrier or shipping line" refers to a voyage including several dedicated stop ports and the term "carrier trip or shipping trip" refers to a trip that a ship sails or an airplane flies from a departure location or port to a destination location or port within a specific time period. Usually, the customers desire to know the details of the carrier or shipping trips to decide whether the goods can be conveyed in time by these trips. In addition, the term "carriers" refers to various vehicles for conveying goods, including ships, airlines or others. The following description concentrates on the shipping application. However, it is understood by those skilled in the art that the applications of other carriers also can use the same method to achieve the same result.

In the conventional case, customers usually require ordering shipping or flight schedule newspapers to acquire the information of the ship or flight lines provided by various carrier agents and their schedules. However, it is difficult to quickly find out available shipping trips that meet their requirement.

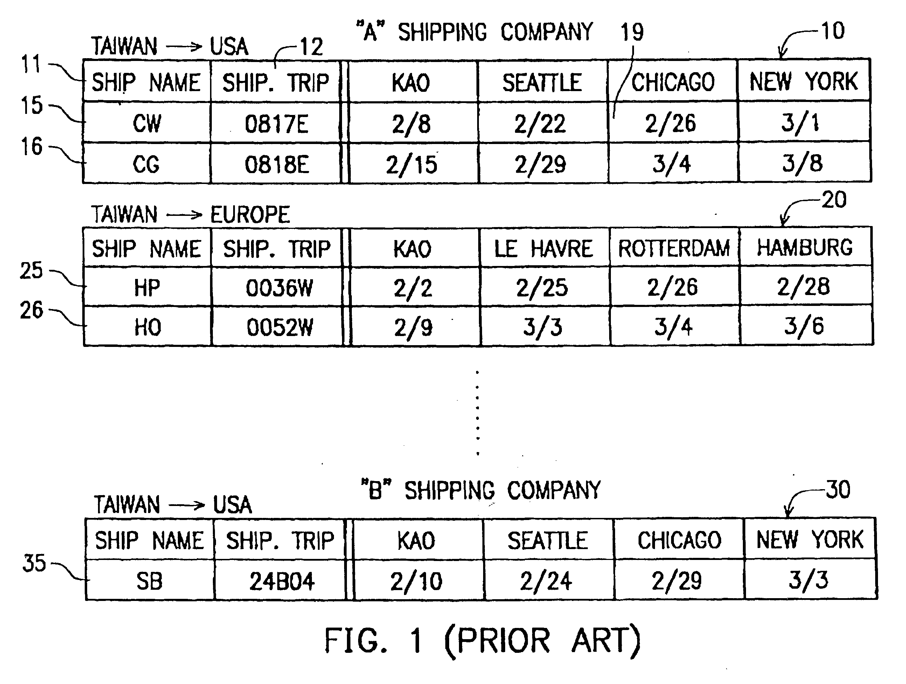

FIG. 1 (Prior Art) is a simplified example of the conventional shipping paper. As shown in FIG. 1, there are two shipping companies, denoted by "A" and "B", illustrated in the shipping paper. The shipping company "A" provides at least two shipping lines 10 and 20, including Taiwan-USA and Taiwan-Europe. The shipping line 10 of Taiwan-USA includes two shipping trips 15 and 16 and the shipping line 20 of Taiwan-Europe includes two shipping trips 25 and 26. In addition, the shipping, company "B" provides at least one shipping line 30 of Taiwan-USA. The shipping line 30 includes a shipping trip 35. Each of the shipping trips contain a column 11 representing the ship name, a column 12 representing the ship trip number and a field 19 containing the stop ports and the arrival dates of these ports. It is noted that a shipping agent can provide many different shipping lines. In addition, a shipping line can be run by two or more shipping agents. For example, the shipping line of Taiwan-USA is run by the shipping company "A" and "B".

According to the example of the conventional shipping paper, it is difficult to find out a suitable shipping trip for customers. As described above, the customers must examine the stop ports of the shipping lines provided by various shipping agents or forwarders and the arrival time of these stop ports. These data are distributed widely. It is obvious that the searching process is time-consuming and inefficient.

### SUMMARY OF THE INVENTION

Therefore, it is desirable to provide a method and system for improving the efficiency of the searching for a suitable carrier trip meeting carriage requirements and establishing an interactive and real-time transaction environment.

The present invention includes a method and a system of processing a searching service for carriage information in a server as defined in the attached independent claims. In one embodiment the server provides a port database that contains a plurality of port records corresponding to a plurality of ports. Each port record includes a carrier trip item having a stop in the corresponding port. Each carrier trip item further includes a first link directed to a web page in the server, which contains data pertaining to a carrier agent who provides the corresponding carrier trip. Then the server receives a port name from a remote computer and searches the port database by using the port name to retrieve one of the port records from the port database corresponding to the port name. Then the retrieved port record and the carrier trip item therein are displayed on the remote computer. The web page on the remote computer is displayed when the first link pertaining to the carrier trip is selected. In addition, the web page contains a second link to access the information of carrier lines provided by the corresponding carrier agent.

In an embodiment of the claimed method and system, the port is generated by the following steps. A first database that contains a plurality of carrier-line records corresponding to a plurality of carrier lines is provided. Each of the carrier lines contains the information of stop ports. In addition, a second database that contains a plurality of carrier-trip records corresponding to a plurality of carrier trips is provided. Each of the carrier trips corresponds to one of the carrier lines. Therefore, a table of the relationship between the carrier trips in the second database and the stop ports in the first database can be determined based on the information of the carrier lines. In addition, a third database that contains a plurality of destination records corresponding to the carrier trips is provided. Each of the destination records defines the corresponding one of the carrier trips, the destination location and the destination date thereof. In addition, a fourth database that contains a plurality of departure records corresponding to the carrier trips is provided. Each of the departure records defines the corresponding one of the carrier trips, the departure location and the departure date thereof. Therefore, using the third database and the fourth database can enhance the contents of the carrier trips in the table to form the desired port database.

In addition, each of the carrier-trip records in the second database contains a date entry, such as the day before the departure date for each carrier trip. Therefore, the table can be determined by using a time period as a limitation based on the data entries of the carrier-trip records.

In addition, the present invention also provides a method and system of the carriage searching service in a server. The server provides a database that contains the information of carrier lines, carrier trips corresponding to the carrier lines, and stop ports of the carrier lines. Each of the carrier trips has a first link directed to a web page in the server. When the server receives a port name from a remote computer, it searches the database by using the port name to retrieve a part of the carrier trips having one of the stop ports corresponding to the port name. Then the retrieved part of the carrier trips is displayed on the remote computer. When the link is selected, the server displays the web page on the remote computer. The web page contains data pertaining to a carrier agent who provides the corresponding carrier trip and contains a second link to access the information of carrier lines provided by the corresponding carrier agent.

### BRIEF DESCRIPTION OF THE DRAWINGS

The following detailed description, given by way of example and not intended to limit the invention solely to the embodiments described herein, will best be understood in conjunction with the accompanying drawings, in which:
FIG. 1 (Prior Art) is an example of the conventional shipping paper;
FIG. 2 is a system diagram of the search service system in accordance with the preferred embodiment of the present invention;
FIG. 3 is a flowchart of the search service in accordance with the preferred embodiment of the present invention;
FIG. 4 illustrates an example of the port database in accordance with the preferred embodiment of the present invention;
FIG. 5 illustrates an example of the shipping agent personalized web page in accordance with the preferred embodiment of the present invention;
FIG. 6 is a data flow of the generation of the port database in accordance with the present embodiment of the present invention; and
FIG. 7 illustrates the types of the data structures applied in the ship-line database, the ship-list database, the ship-destination database and the ship-start database in accordance with the preferred embodiment of the present invention.

### DETAILED DESCRIPTION OF THE INVENTION

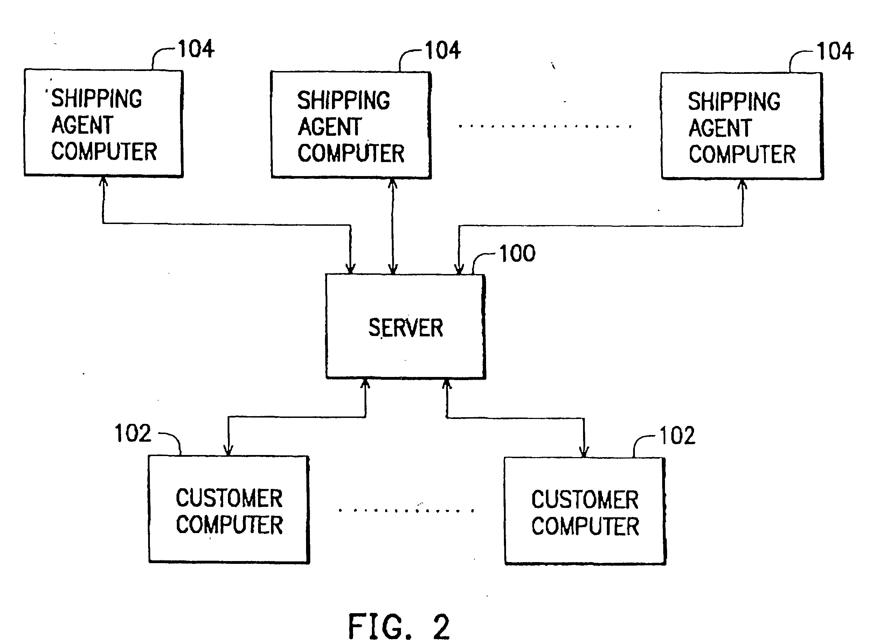

FIG. 2 is a system diagram of the search service system in this preferred embodiment. As shown in FIG. 2, the search service system includes a server 100, several customer computers 102 and several shipping agent computers 104. These terminals are linked via a network, such as the Internet, a local area network, a wide area network or other types of networks. In this embodiment, the shipping agents using the shipping agent computers 104 must provide their shipping-line data to the server 100. The server 100 can arrange these shipping-line data provided by different shipping agents or forwarders in a better form for searching. Referring to FIG. 1, the shipping-line data provided by a shipping agent include several shipping lines provided by this shipping agent and several shipping trips for these shipping lines, respectively. Each of the shipping trips contains a ship name, a shipping trip number, several ports and the arrival dates, as shown in FIG. 1. In addition, some shipping-trip data provided by the shipping agent can further contain a closing date and so on. In addition, the shipping agents can further provide their business data to generate personalized and dedicated web pages in this embodiment, which will be described later. On the other hand, the customers using the customer computers 102 can access the server 100 to search for the desired shipping trips to convey goods.

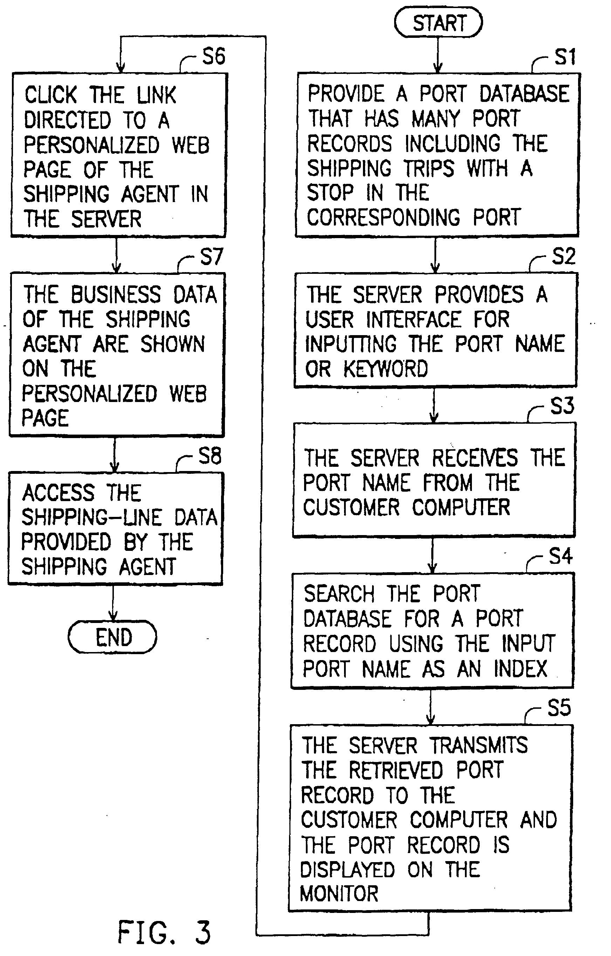

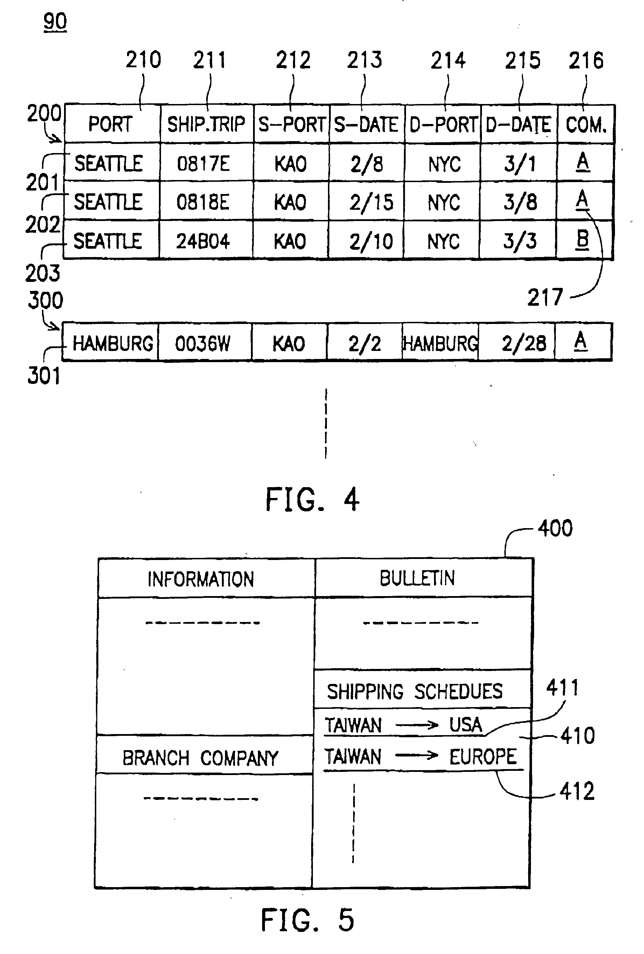

FIG. 3 is a flowchart of the search service in this embodiment. First, the server 100 establishes or provides a port database that has many port records for listing the shipping trips with a stop in the corresponding port (S1) In this embodiment, the port database is generated by the shipping-line data provided by various shipping agents and forwarders and will be described later. It is noted that the port database must be updated by the server 100 if new shipping-line data arrives. The data structure of the port database 90 is illustrated in FIG. 4, in which the shipping-line data shown in FIG. 1 are applied. As shown in FIG. 4, the port database 90 contains a port record 200 and a port record 300. The port record 200 contains shipping-trip (or carrier-trip) items 201, 202 and 203, and the port record 300 only contains a shipping-trip item 301. The data structure of a shipping-trip item is composed of a port index 210, a ship trip number 211, a departure port 212, a departure date 213, a destination port 214, an arrival date 215 and the name of the shipping agent 216. The port index 210 is used to store the name or ID of the corresponding port in the port record. For example, the port index of the port record 200 stores the port "SEATTLE" and the port index of the port record 300 stores the port "HAMBURG". In addition, each of the shipping-trip items contains a link in the column 216 (the name of the shipping agent). This link is directed to a personalized web page for the shipping agent providing the corresponding shipping trip.

Then the server 100 provides a user interface for inputting the port name or keyword as an index (S2). It is noted that in this embodiment only the port information is used as an index, but it is understood by those skilled in the art that other indexes also can be applied together to this embodiment. For example, the server 100 also can use the names of the shipping agents and forwarders as indexes for searching. In the following description, suppose that the customer enters a port "SEATTLE" as the searching keyword.

It is obvious that the port database 90 can be easily searched by using the port name as the search index. The server 100 receives the port name from the customer computer 102 (S3) and searches the port database 90 for a port record using the input port name "SEATTLE" as an index (S4). Therefore, the server 100 can ferret out the port record 200 according to the searching condition. Then the server 100 transmits the retrieved port record to the customer computer 102 and the retrieved port record 200 is displayed on a monitor of the customer computer 102 (S5).

Using steps S1~S5, customers can successfully and easily find out the shipping trips having a stop that they need. In other words, customers do not need to use the shipping-line data distributed over a copy of the shipping paper and can easily complete the searching process.

As described above, each of the shipping-trip items in a port record contains a link directed to a web page containing the business data of the shipping agent or forwarder. If the customer desires to acquire more information about the shipping agents or forwarders, the customer can click the link 217 directed to a personalized web page containing the business data of the corresponding shipping agent (S6). After clicking, the business data of the corresponding shipping agent or forwarder are shown on the personalized web page (S7). For example, the personalized web page of the shipping agent or forwarder can be created by and stored in the server 100. The shipping agent or forwarder only provides raw data and the server 100 can automatically design this web page according to the preferences of the shipping agent or forwarder.

FIG. 5 illustrates an example of the shipping agent personalized web page 400 in this embodiment. As shown in FIG. 5, this web page 400 contains an information region for listing the staff that the customer can contact to acquire more shipping information, a branch company field for listing the addresses and telephones of branch companies, a bulletin for announcing important messages and a shipping schedule field 410 for announcing the shipping lines that the shipping agent serves. As shown in FIG. 5, the shipping schedule field 410 contains a shipping line denoted by "Taiwan-USA" and with a network link 411, and a shipping line denoted by "Taiwan-Europe" and with a network link 412. When clicking the dynamic link 411 or 412, the customer can access the shipping-line data provided by the shipping agent (S8). Using the features of dynamic linking, the server 100 can establish an interactive and real-time transaction environment for the customers and the shipping agents.

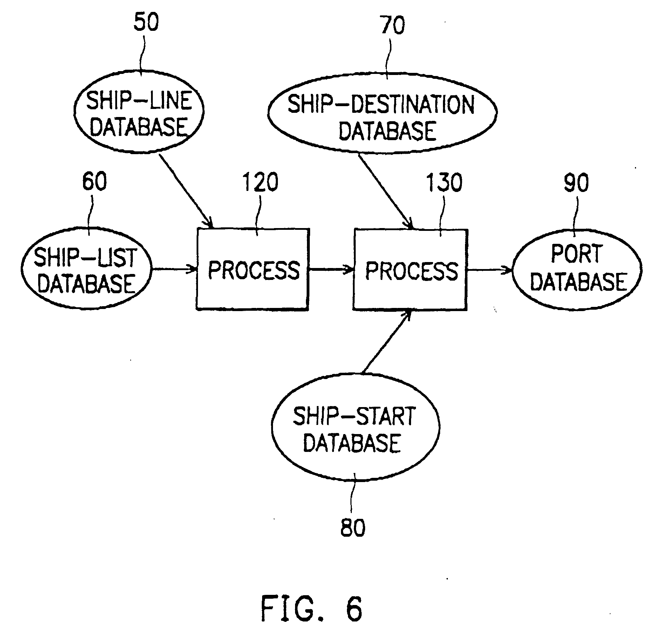

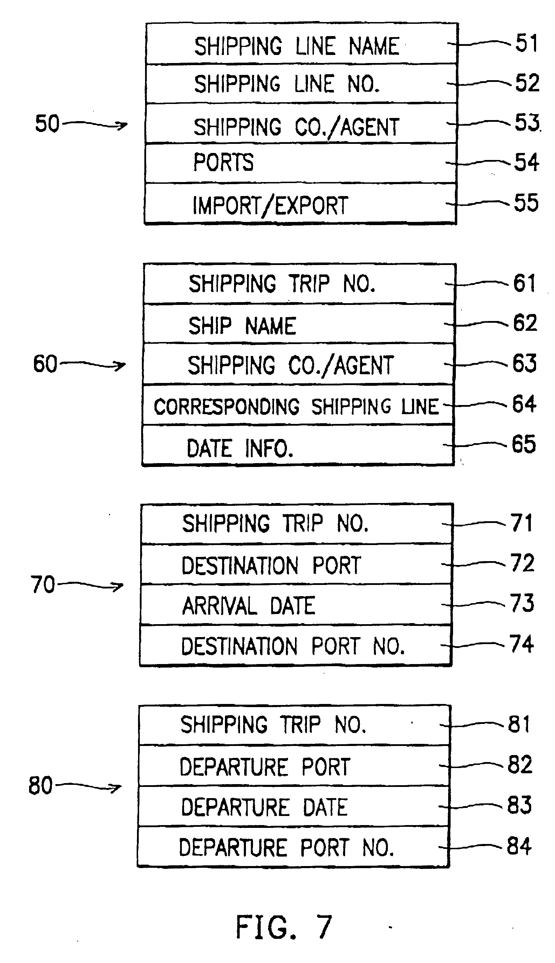

FIG. 6 is a data flow of the generation of the port database 90 in this embodiment. In this embodiment, there are four preliminary databases, including a ship-line database 50, a ship-list database 60, a ship-destination database 70 and the ship-start database 80, used in the generation of the port database 90. FIG. 7 illustrates the types of the data structures applied in these databases in this embodiment .

The ship-line (or carrier-line) database 50 contains many shipping-line records corresponding to various shipping lines, respectively. In FIG. 7, each of the shipping line records contains the shipping line name 51, the shipping line number 52, the shipping agent 53, the ports 54 and the import/export information 55, wherein the ports 54 are the stop ports of the shipping line.

The ship-list database 60 contains many shipping-trip records corresponding to various shipping trips, respectively. In FIG. 7, each of the shipping trip records contains the shipping trip number 61, the ship name 62, the shipping agent 63, the corresponding shipping line 64 and the date information 65. The date information 65, such as the day before the departure date for each shipping trip, is used for adding limitations.

In FIG. 6, the process 120 is used to determine a table for indicating the relationship between the shipping trip number 61 in the ship-list database 60 and the ports 54 in the ship-line database 50 based on the information of the shipping lines present in both databases.

The ship-destination database 70 contains many destination records corresponding to the shipping trips, respectively. In FIG. 7, each of the destination records includes the shipping trip number 71, the destination port 72, the arrival date 73 and the destination port number 74. The ship-start database 80 contains many departure records corresponding to the shipping trips, respectively. In FIG. 7, each of the departure records includes the shipping trip number 81, the departure port 82, the departure date 83 and the departure port number 84. In FIG. 6, the process 130 uses the ship-destination database 70 and the ship-start database 80 to enhance the contents of the shipping trips in the table output in the process 120. It is noted that the server 100 can set a date limitation, for example, yesterday, and verify the date information 65 to filter out obsolete shipping trips.

As described above, this embodiment also can be applied to the carriage business by airlines or other vehicles.

While the invention has been described by way of example and in terms of the preferred embodiment, it is to be understood that the invention is not limited to the disclosed embodiments. On the contrary, it is intended to cover various modifications and similar arrangements as would be apparent to those skilled in the art. Therefore, the scope of the appended claims should be accorded the broadest interpretation so as to encompass all such modifications and similar arrangements.

## Claims

1. A method of processing a searching service for carriage information in a server (100), comprising the steps of:
providing a port database (90) that contains a plurality of port records (200, 300) corresponding to a plurality of ports in the server, each port record including at least one carrier trip (201, 202, 203) having a stop in that port;
receiving a port name from a remote computer (102) ;
searching the port database (90) by using the port name to retrieve one of the port records from the port database corresponding to the port name; and
displaying the retrieved port record and the carrier trip item therein on the remote computer.

2. A method as recited in claim 1 in which each carrier trip item includes a first link directed to a web page in the server; further comprising the step of displaying the web page (400) on the remote computer when the first link pertaining to the carrier trip is selected.

3. A method as recited in claim 2, wherein the web page (400) contains data pertaining to a carrier agent who provides the carrier trip selected.

4. A method as recited in claim 2 or 3, wherein the web page (400) contains a second link to access the information of carrier lines provided by the corresponding carrier agent.

5. A method as recited in any of the preceding claims, wherein the generation of the port database comprises the steps of:
providing a first database (50) that contains a plurality of carrier-line records corresponding to a plurality of carrier lines, each of the carrier lines containing the information of stop ports;
providing a second database (60) that contains a plurality of carrier-trip records corresponding to a plurality of carrier trips, each of the carrier trips corresponding to one of the carrier lines;
determining a table of the relationship between the carrier trips in the second database and the stop ports in the first database based on the information of the carrier lines;
providing a third database (70) that contains a plurality of destination records corresponding to the carrier trips, each of the destination records defining the corresponding one of the carrier trips, the destination location and the destination date thereof;
providing a fourth database (80) that contains a plurality of departure records corresponding to the carrier trips, each of the departure records defining the corresponding one of the carrier trips, the departure location and the departure data thereof; and
enhancing the contents of the carrier trips in the table by using the third database and the fourth database.

6. A method as recited in claim 5, wherein in the second database (60), each of the carrier-trip records contains a date entry; wherein the table is determined with a time period based on the data entries of the carrier-trip records.

7. A method of processing a searching service for carriage information in a server (100), comprising the steps of:
providing a database (50) that contains the information of carrier lines, carrier trips corresponding to the carrier lines, and stop ports of the carrier lines; each of the carrier trips having a first link directed to a web page in the server (100) ;
receiving a port name from a remote computer (102);
searching the database (50 by using the port name to retrieve a part of the carrier trips having one of the stop ports corresponding to the port name;
displaying the retrieved part of the carrier trips; and
displaying the web page (400) on the remote computer when the first link is selected.

8. A method as recited in claim 7, wherein the web page contains data pertaining to a carrier agent who provides the corresponding carrier trip.

9. A method as recited in claim 8, wherein the web page contains a second link to access the information of carrier lines provided by the corresponding carrier agent.

10. A system for processing a searching service for carriage information in a server (100), comprising:
a port database that contains a plurality of port records (200, 300) corresponding to a plurality of ports in the server, each port record including at least one carrier trip item having stop in the corresponding port, each carrier trip item (201, 202, 203) preferably including a first link directed to a web page (400) in the server;
means for receiving a port name from a remote computer (102);
means for searching the port database (90) by using the port name to retrieve one of the port records from the port database corresponding to the port name;
means for displaying the retrieved port record and the carrier trip item therein on the remote computer; and
preferably also for displaying the web page (400) on the remote computer when the first link pertaining to the carrier trip is selected.
